Europäisches Patentamt

**European Patent Office**

**Office européen des brevets**

(19)

(11) Veröffentlichungsnummer: **0 182 774**
**B1**

(12) **EUROPÄISCHE PATENTSCHRIFT**

(45) Veröffentlichungstag der Patentschrift:
06.12.89

(51) Int. Cl.⁴: **H 02 P 8/00**

(21) Anmeldenummer: **85890271.1**

(22) Anmeldetag: **30.10.85**

(54) Schaltungsanordnung zur Uberwachung eines Schrittmotors.

(30) Priorität: **20.11.84 DE 3442373**

(43) Veröffentlichungstag der Anmeldung:
**28.05.86 Patentblatt 86/22**

(45) Bekanntmachung des Hinweises auf die Patenterteilung:
**06.12.89 Patentblatt 89/49**

(84) Benannte Vertragsstaaten:
**AT CH DE FR GB IT LI SE**

(56) Entgegenhaltungen:
**EP-A-0 155 932
DE-A-2 345 416
DE-A-2 634 887
DE-A-2 721 630
DE-A-2 805 363
DE-A-3 035 919
US-A-4 346 463**

(73) Patentinhaber: **VOEST- ALPINE AUTOMOTIVE
Gesellschaft mbh, Muldenstrasse 5, A-4020 Linz
(AT)**

(72) Erfinder: **Seibt, Artur, Dr. Ing., Prinz- Eugen-
Strasse 6, A-1040 Wien (AT)**

(74) Vertreter: **Matschnig, Franz, Dipl.- Ing.,
Siebensterngasse 54 Postfach 452, A-1071 Wien
(AT)**

EP 0 182 774 B1

## Beschreibung

Die Erfindung bezieht sich auf eine Schaltungsanordnung nach dem Oberbegriff des Patentanspruches.

Schrittmotoren weisen den Vorteil auf, daß sich ihre Abtriebswelle in Abhängigkeit von den zugeführten Steuerimpulsen um einen genau definierten Winkel verdreht. Man versucht daher Schrittmotoren unter anderem auch zur Steuerung der Regelstange von Einspritzpumpen oder von Pumpedüsen bei Kraftfahrzeugen heranzuziehen. Hiebei tritt jedoch die Problematik auf, daß der Kraftbedarf zur Verstellung der Regelstange unter normalen Betriebsbedingungen meist verhältnismäßig gering ist, jedoch bei tiefen Temperaturen (z. B. Kaltstart im Winter) zufolge der angestiegenen Viskosität des Schmieröls beträchtlich oberhalb des durchschnittlichen Kraftbedarfes liegen kann. Es hat sich weiters gezeigt, daß auch während des normalen Betriebes die zur Verstellung der Regelstange erforderliche Kraft kurzfristig stark ansteigen kann, da aus nicht völlig geklärten Gründen plötzlich eine erhöhte Reibung auftritt.

Werden Schrittmotoren zu stark belastet, so gehen Schritte verloren, d.h. der Motor führt eine geringere Anzahl von Schritten aus als vorgegeben oder er bleibt ganz stehen. Dieser Fall kann auch beim Antrieb einer Regelstange eintreten, wenn der Kraftbedarf zu ihrer Verschiebung aus den oben genannten Gründen zu hoch wird. Es versteht sich, daß ein Blockieren des Schrittmotors oder der Verlust von Schritten im Falle der Regelung z. B. eines Dieselmotors untragbar und daher unter allen Umständen zu vermeiden ist.

Eine Möglichkeit zur Abhilfe besteht darin, den Schrittmotor sowie dessen Leistungsendstufe so zu dimensionieren, daß die Funktion unter allen Lastbedingungen sichergestellt ist. Dies bedeutet jedoch einen sehr großen Kostenaufwand für nur selten eintretende Betriebsbedingungen. Überdies steigt bei einer solchen Überdimensionierung auch der Raumbedarf für den Schrittmotor und seine Endstufe, was bei den gedrängten Raumverhältnissen in einem Kraftfahrzeug sehr nachteilig ist. Ein ständig fließender hoher Motorstrom hätte ferner eine unerwünschte Temperaturerhöhung der Ansteuerelektronik und des Schrittmotors selbst zur Folge; er würde einerseits wegen der benötigten Kühlfläche ein größeres Gehäuse für die Elektronik bedingen und andererseits die Zuverlässigkeit und Lebensdauer der Bauteile entscheidend verschlechtern, da diese bereits Umgebungstemperaturen bis 125°C ausgesetzt sind und der Temperatureinfluß exponentiell steigt.

Es ist auch eine Schaltungsanordnung für die Regelung von Schrittmotoren bekannt geworden (DE-A-3 035 919), bei welcher die Schrittfrequenz der jeweiligen Belastung angepaßt wird. Hiebei oszilliert die Schrittfrequenz ständig zwischen der Start/Stop-Frequenz und der von der Belastung abhängigen, maximal möglichen Frequenz.

Nachteilig ist bei dieser bekannten Schaltungsanordnung, daß keine Korrektur der Schrittposition vorgesehen ist, sodaß sich im Betrieb Schrittverluste kumulieren. Außerdem erfolgt die Anpassung an Belastungen nicht in optimaler Zeit.

Aus der DD-PS-116 996 geht eine Schaltungsanordnung der eingangs angegebenen Art hervor, mit deren Hilfe die Drehzahl eines Schrittmotors auch bei wechselnden Lastbedingungen konstant gehalten werden soll. Hiebei erfolgt die Regelung innerhalb jedes einzelnen Motorschrittes bzw. Schrittimpulses, wobei in einer Koinzidenzeinheit jeder Taktimpuls mit dem Ausgang eines Rückmelders verglichen wird. Falls der Rückmelder nicht gleichzeitig mit dem Steuerimpuls einen Rückmelderimpuls liefert, wird der Strom des Schrittmotors erhöht. Nachteilig ist hiebei, daß der Schritt verloren geht, wenn die Regelung nicht innerhalb des Schrittes erfolgen kann und daß ein derartiger Schrittverlust überhaupt nicht erkannt wird.

Eine Vorrichtung zur schlupffreien Nachlaufsteuerung von Schrittmotoren geht aus der DE-A-2 345 416 hervor, bei der Impulsfolgen eines Sollwertgebers und eines Stellungsgebers in einem Zähler miteinander verglichen werden. Der erhaltene Differenzwert wird zur Erzeugung einer Impulsfolge herangezogen, über die der Schrittmotor nachgestellt wird. Auch diese Lösung erfordert eine Dimensionierung des Schrittmotors, die der maximal benötigten Spitzenleistung angepaßt ist.

Bei einer bekannten, für Uhrenmotoren vorgesehenen Schaltung (US-PS-4 346 463) wird der Stromverlauf des Schrittmotors untersucht, der für allfällige Abweichungen von der Sollposition repräsentativ ist. Falls Abweichungen festgestellt werden, wird dem Motor eine zweite Impulsfolge mit längeren Impulsen zugeführt. Über die Absolutposition des Schrittmotors erhält man jedoch keine Information. Dimensionierungsprobleme hinsichtlich der maximalen Verlustleistung stellen sich bei den in Frage kommenden minimalen Leistungen nicht.

Der aus der DE-A-2 634 887 bekannt gewordene Lageregelkreis dient zur Überwachung des mittels eines Schrittmotors betätigbaren Kraftstoffschiebers bei Geschoßen mit luftatmenden Triebwerken. Aus Kostengründen wird als analoger Rückmelder ein Potentiometer verwendet und über einen Analog/Digitalwandler eine Impulsfolge gewonnen, die mit einer vorgegebenen Impulsfolge verglichen wird. Bei Abweichungen werden über eine UND-Schaltung weitere Impulse an den Schrittmotor gelegt. An eine Motorstromerhöhung ist hiebei nicht gedacht.

Die DE-A-2 721 630 beschreibt die Ansteuerung eines Schrittmotors mit Impulsen, deren Frequenz und/oder Länge geändert werden können, damit der Mittelwert des Motorstroms einer vorgegebenen Funktion entspricht. Überdies wird die Soll-Position mit der jeweiligen, von einem Rückmelder erfaßten Ist-Position verglichen und entsprechend der Abweichung die Versorgungsspannung des Schrittmotors in der Endstufe durch Änderung deren Leistungsverstärkung korrigiert.

Die DE-A-2 805 363 beschreibt die Steuerung von Schrittmotoren, wobei jedem Schrittmotor ein Winkelsensor zugeordnet ist und jeder stabilen Stellung des Schrittmotors nur ein einziges definiertes Signal entspricht. Es wird hier geprüft, ob ein Schrittverlust aufgetreten ist. Falls ein solcher erkannt wird, wird im Prinzip eine bestimmte Zeitspanne abgewartet, nach deren Ablauf ein Fehlersignal abgegeben wird, soferne bis dahin der Schrittmotor nicht die richtige Position angelaufen hat. Eine Beeinflussung des Motorstroms ist diesem Dokument nicht zu entnehmen.

Ziel der Erfindung ist die Schaffung einer Schaltungsanordnung, welche eine flexible Anpassung an selten vorkommende Überlastbedingungen des Motors ermöglicht, ohne daß jedoch eine Überdimensionierung des Motors oder seiner Endstufe erforderlich wäre.

Dieses Ziel läßt sich mit einer Schaltungsanordnung entsprechend dem Kennzeichen des Patentanspruches erreichen.

Die Erfindung samt ihren weiteren Vorteilen und Merkmalen ist im folgenden an Hand eines beispielsweisen Blockschaltbildes näher erläutert.

Die Schaltungsanordnung nach der Erfindung ist in erster Linie zur Steuerung und Überwachung eines Schrittmotors gedacht, der zur Verstellung der Regelstange von Einspritzpumpen oder von Pumpedüsen bei Dieselmotoren dient. Wie nämlich bereits eingangs erwähnt, treten beim Einsatz in Kraftfahrzeugen aus diversen Gründen stark wechselnde Lastbedingungen für den Schrittmotor auf. Selbstverständlich kann die Erfindung auch auf anderen Gebieten der Steuerung und Regelung Anwendung finden, wenn ähnliche Probleme hinsichtlich der Motorbelastung bestehen und Schrittverlust vermieden werden muß.

Das Blockschaltbild zeigt einen Schrittmotor 1, der z. B. als Unipolar-Schrittmotor ausgeführt ist. An der Welle 2 des Schrittmotors 1 sitzt ein Rückmelder 3, der entsprechend der Anzahl der durchgeführten Schritte ein Signal $s_i$ abgibt.

Die Wicklungen des Schrittmotors 1 werden mittels eines Signales $S_1$ von einer Leistungsstufe 4 gespeist, die z. B. Leistungsschalttransistoren enthält. Eine derartige Endstufe und zum Teil auch die Ansteuerung sind in der Patentanmeldung A 938/84, Patent....., beschrieben. Die Leistungsstufe wird ihrerseits von einem Steuergenerator 5 angesteuert, der im allgemeinen einen komplexen elektronischen Aufbau besitzt. Bei Anwendung im Zusammenhang mit der Regelung von Dieselmotoren weist dieser Steuergenerator ein oder mehrere Mikrocomputer auf, die je nach eben vorliegenden Meßwerten, wie Motordrehzahl, Gaspedalstellung, Luftdruck etc. und im Vergleich mit gespeicherten, motor und/oder fahrzeugspezifischen Parametern Ausgangsimpulse $S_b$ an die Leistungsstufe 4 abgeben. Hiebei wird auch die Schrittfrequenz den jeweiligen Erfordernissen angepaßt.

Erfindungsgemäß wird nun verglichen, ob die Anzahl der Schritte, die entsprechend dem Signal $s_b$ durchzuführen sind, mit der Anzahl der tatsächlich durchgeführten, von dem Rückmelder 3 angezeigten Schritte übereinstimmt. Ist ein Stromverlust festzustellen, so wird vorübergehend der Strom in den Motorwicklungen erhöht, wodurch etwa vorliegende Reibungshindernisse etc. überwunden werden können.

Hiezu ist ein Komparator vorgesehen, dem einerseits das Ausgangssignal $s_i$ des Rückmelders 3 als Ist-Signal und andererseits ein Sollsignal $s_s$ des Steuergenerators 5 zugeführt sind. Dieses Soll-Signal $s_s$ entspricht zumindest im wesentlichen dem der Leistungsstufe 4 zugeführten Ausgangssignal $s_b$ des Steuergenerators 5.

Der Komparator 6 der z. B. geeignete Zähler enthält, liefert an seinem Ausgang ein Fehlersignal $s_f$, falls innerhalb eines bestimmten Zeitabschnittes die Anzahl der durchgeführten Schritte des Schrittmotors 1 geringer ist als die Anzahl der durch den Steuergenerator 5 vorgegebenen Schritte. Meistens wird es am einfachsten und zweckmäßigsten sein, den Komparator 6 als Teil eines ohnedies zur Verfügung stehenden, mit entsprechender Software ausgestatteten Mikrocomputers auszubilden.

Das Fehlersignal $s_f$ wird über ein Zeitglied 7, dessen Funktion untenstehend noch näher erläutert wird, einer Stromeinstellstufe 8 zugeführt, über deren Ausgangssignal $s_a$ die Größe des Motorstromes bestimmbar ist. Bei Vorliegen eines Fehlersignales $s_f$ bzw. $s_f'$ (am Ausgang des Zeitgliedes 7) wird über die Stromeinstellstufe 8 und die Leistungsstufe 3 der Motorstrom von einem ersten vorgebbaren Stromwert auf einen zweiten Stromwert angehoben, der deutlich oberhalb des ersten Wertes liegt. In der Praxis wird der erste Stromwert so gewählt, daß bei betrieb mit diesem Strom der Schrittmotor auch bei hohen Umgebungstemperaturen immer unterhalb der Grenze seiner Dauerbelastbarkeit betrieben wird. Der zweite Stromwert hingegen liegt so hoch, daß dem Schrittmotor eine Leistung zugeführt wird, die oberhalb seiner Dauerbelastbarkeit liegt. Mit diesem Stromwert kann der Motor, speziell bei hohen Umgebungstemperaturer, nur kurze Zeit betrieben werden. Der Anstieg auf den höher gelegenen Stromwert soll rasch erfolgen, um so wenig wie möglich an Zeit und an Schritten zu verlieren. Der Begriff "rasch" ist natürlich im Zusammenhang mit den verschiedenen Zeitkonstanten der verwendeten Schaltungs- und Regelanordnung zu verstehen. Der Anstieg muß nicht eben sprunghaft erfolgen, er wird in der Praxis oft nach einer Treppenfunktion oder rampenförmig erfolgen.

Das Zeitglied 7 ermöglicht einen im wesentlichen unverzögerten Anstieg des Ausgangssignales $s_a$ der Stromeinstellstufe 8, d.h. das Signal $s_f'$ tritt praktisch unverzögert mit dem Fehlersignal $s_f$ auf, wobei der erhöhte Stromwert zunächst auch nach Fortfall des Fehlersignales $s_f$ aufrecht erhalten wird. Nach einiger Zeit wird über das Zeitglied 7, das auch Teil der Stromeinstellstufe 8 sein kann, der Strom wieder abgesenkt und - soferne daraufhin nicht wieder der Verlust von Schritten gemeldet wird - auf dem niedrigen Wert beibehalten.

Dank der Erfindung muß bei der Dimensionierung sowohl des Schrittmotors als auch der Leistungsstufe nicht auf den selten auftretenden maximalen Leistungsbedarf abgestellt werden, da bewußt eine kurzfristige Überlastung in Kauf genommen wird. Im Winterbetrieb von Kraftfahrzeugen kann der erhöhte Leistungsbedarf wegen der Viskositätserhöhung der Schmiermittel auch länger, z. B. zehn Minuten, dauern, doch wirkt in diesem Fall die vorerst niedrige Temperatur einer möglichen thermischen Überlastung des Schrittmotors und der Leistungsstufe entgegen.

Es sei noch erwähnt, daß die Stromeinstellstufe 6 bzw. das Zeitglied 7 unter Verwendung eines Mikrocomputers auch so eingerichtet sein können, daß der nach Auftreten von Schrittverlusten erhöhte Motorstrom nach einiger Zeit langsam abgesenkt wird, bis wieder der Verlust von Schritten festgestellt wird und hierauf ein wenig oberhalb dieses Strompegels gehalten wird, sodaß äußerst wirtschaftlich der gerade erforderliche Stromwert eingehalten wird. Dieser Wert kann auch abgespeichert werden, sodaß bei erneuter kurzfristiger Stromerhöhung rasch wieder auf den "Optimalwert" übergegangen werden kann. Überhaupt sollen unter dem ersten und zweiten Stromwert keine absolut festen Werte verstanden werden. Diese Werte können insbesondere langfristig, z. B. entsprechend den herrschenden Temperaturverhältnissen, eine vorbestimmte Änderung erfahren.

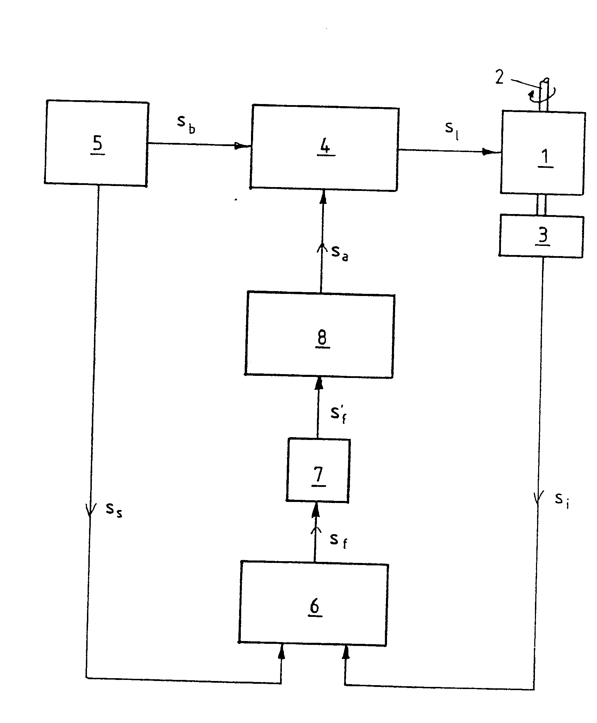

**Patentanspruch**

Schaltungsanordnung zur Überwachung eines Schrittmotors (1), mit einem Steuergenerator (5) zur Erzeugung der Steuerimpulse für den Schrittmotor, mit einer dem Steuergenerator nachgeschalteten Leistungsstufe (4) zur Speisung des Schrittmotors, mit einem mit dem Schrittmotor mechanisch gekoppelten Rückmelder (3), der zur Abgabe eines Ist-Signales ($s_i$) eingerichtet ist, mit einem Komparator (6) zum Vergleich der Anzahl der vorgegebenen Schritte aus dem Soll-Signal ($s_s$) des Steuergenerators (5) mit der Anzahl der durchgeführten Schritte aus dem Ist-Signal ($s_i$) des Rückmelders (3) und zur Abgabe eines Fehlersignales ($s_f$, $s_f'$) bei Nichtübereinstimmung seiner beiden Eingangssignale und mit einer Stromeinstellstufe (8), deren Eingang das Fehlersignal des Komparators zuführbar ist und deren die Größe des Schrittmotorstromes ($s_1$) bestimmendes Ausgangssignal ($s_a$) der Leistungsstufe zuführbar ist, dadurch gekennzeichnet, daß zwischen den Ausgang des Komparators (6) und den Eingang der Leistungsstufe (4) ein Zeitglied (7) geschaltet ist, welches einen im wesentlichen unverzögerten Anstieg des Ausgangssignales ($s_a$) von einem ersten vorgebbaren Stromwert auf einen zweiten, oberhalb des ersten Stromwertes liegenden Stromwert und ein verzögertes Abfallen des Ausgangssignales auf den ersten Stromwert ermöglicht.

**Claim**

Circuit arrangement for monitoring a stepping motor (1), with a control generator (5) for generating the control pulses for the stepping motor, with a power stage (4), downstream of the control generator, for feeding the stepping motor, with a check-back indicator (3), mechanically coupled to the stepping motor and set up for the emission of an actual signal ($s_i$), with a comparator (6) for comparison of the number of prescribed steps, from the set signal ($s_s$) of the control generator (5), with the number of steps carried out, from the actual signal ($s_i$) of the check-back indicator (3), and for the emission of an error signal ($s_f$, $s_f'$) if its two input signals do not coincide, and with a current setting stage (8), to the input of which the error signal of the comparator can be fed and the output signal ($s_a$) of which, determining the magnitude of the stepping motor current ($s_1$) can be fed to the power stage, characterized in that a timing element (7) is connected between the output of the comparator (6) and the input of the power stage (4), which timing element makes possible an essentially undelayed increase in the output signal ($s_a$) from a first prescribable current value to a second current value, lying above the first current value, and a delayed decrease in the output signal to the first current value.

**Revendication**

Montage de commande d'un moteur pas-à-pas (1), comportant un générateur de commande (5) destiné à produire des impulsions de commande pour le moteur pas-à-pas, un étage de puissance (4) branché en aval dudit générateur de signaux de commande pour l'alimentation du moteur pas-à-pas, un dispositif indicateur (3) accouplé mécaniquement au moteur pas-à-pas et appelé à produire un signal de valeur instantanée (s/j), un comparateur (6) destiné à comparer le nombre de pas défini par le signal de consigne ($s_s$) du générateur de signaux de commande (5) au nombre de pas effectués défini par le signal de valeur instantané (s/j) dudit dispositif indicateur (3) et pour fournir un signal d'erreur ($s_f$, s'f) lorsque les deux signaux d'entrée ne correspondent pas l'un à l'autre, ainsi qu'un étage de réglage de courant (8) qui est susceptible de recevoir à son entrée le signal d'erreur comparateur et de produire un signal de sortie ($s_a$) déterminant la valeur du courant du moteur pas-à-pas (51) et transmis audit étage de puissance, caractérisé en ce qu'un organe de temporisation (7) est branché entre la sortie du comparateur (6) et l'entrée de l'étage de puissance (4) qui permet l'accroissement, sans retard notable, du signal de sortie ($s_a$) d'une première valeur de courant prédéterminée jusqu'à une seconde valeur de courant supérieure à ladite première valeur, ainsi qu'une diminution retardée du signal de sortie vers la première valeur de courant.